(19) Europäisches Patentamt
European Patent Office
Office européen des brevets

(11) **EP 1 205 765 B1**

(12) **EUROPÄISCHE PATENTSCHRIFT**

(45) Veröffentlichungstag und Bekanntmachung des Hinweises auf die Patenterteilung:
**02.06.2004 Patentblatt 2004/23**

(51) Int Cl.⁷: **G01S 17/93**, G01S 17/89, G01S 7/48

(21) Anmeldenummer: **01125101.4**

(22) Anmeldetag: **23.10.2001**

(54) **Verfahren zur Leitungserkennung für tieffliegende Fluggeräte**

Method of recognising conducting cables for low flying aircraft

Méthode de reconnaissance des fils conducteurs pour aéronefs volants à basse altitude

(84) Benannte Vertragsstaaten:
**AT CH DE FR IT LI**

(30) Priorität: **09.11.2000 DE 10055572**

(43) Veröffentlichungstag der Anmeldung:
**15.05.2002 Patentblatt 2002/20**

(73) Patentinhaber: **EADS Astrium GmbH**
**81663 München (DE)**

(72) Erfinder: **Schaefer, Christoph, Dr.**
**88048 Friedrichshafen (DE)**

(74) Vertreter: **Ulrich, Thomas**
**EADS Deutschland GmbH**
**Patentabteilung**
**LG-SP**
**Willy-Messerschmitt-Strasse**
**85521 Ottobrunn (DE)**

(56) Entgegenhaltungen:
DE-C- 19 605 218        GB-A- 2 341 506
US-A- 5 508 706        US-A- 6 018 698

**Beschreibung**

Die Erfindung betrifft ein echtzeitfähiges Verfahren zur Hinderniserkennung für tieffliegende Fluggeräte. Unter Hindernissen sind dabei speziell Überlandleitungen zu verstehen. Diese stellen für tieffliegende Fluggeräte, insbesondere Hubschrauber, ein wesentliches Gefahrenpotential dar.

In der **DE 196 05 218 C1** ist ein Verfahren zur Hinderniswarnung für tieffliegende Fluggeräte beschrieben. Dabei werden mittels eines Sensors Entfernungsbilder der vor dem Fluggerät sich befindenden Umgebung erzeugt. Aus den Entfernungsbildern werden Hinderniskonturen extrahiert, indem zwischen benachbarten Bildpixeln mittels Hochpassfiltern nach Diskontinuitäten ("Sprüngen") gesucht wird. Mit einem Navigationssystem kann die Lage der Hinderniskontur der natürlichen Außensicht graphisch überlagert werden. Eine Erkennung des Hindernisses im eigentlichen Sinn findet nicht statt.

Aufgabe der Erfindung ist es, ein Verfahren zur Leitungserkennung vorzuschlagen, mit dem Leitungen sicher und in Echtzeit erkannt werden können, und welches nur einen geringen Hardwareaufwand erfordert.

Diese Aufgabe wird mit dem Gegenstand des Patentanspruch 1 gelöst. Vorteilhafte Ausführungen der Erfindung sind Gegenstand weiterer Ansprüche.

Das erfindungsgemäße Verfahren weist insbesondere folgende Vorteile auf:

- maximale Zuverlässigkeit bei der Leitungserkennung, weil der volle, dreidimensionale Verlauf einer Leitung zur Erkennung genutzt wird;
- genaue Bestimmung von Position und Ausdehnung der Leitungen möglich;
- Echtzeitfähigkeit bei geringem Hardwareaufwand;
- Tag- und Nachtbetrieb gleichermaßen möglich.

Die Erfindung wird anhand von konkreten Ausführungsbeispielen unter Bezugnahme auf Fig. näher erläutert. Es zeigen:

Fig. 1    die Systemarchitektur für ein System zur Ausführung des erfindungsgemäßen Verfahrens;
Fig. 2    ein Blockschaltbild zum Ablauf des erfindungsgemäßen Verfahrens;
Fig. 3    Houghtransformation: Messpunkt mit zugehöriger Geradenschar;
Fig. 4    Houghtransformation: Parametrisierung eines Leitungssegments in Seitenansicht;
Fig. 5    Houghtransformation: Funktionsgraphen zweier Messpunkte im diskreten Parameterraum;
Fig. 6    Adressraum des Hardwarespeichers mit diskretisiertem Funktionsgraph (vor und nach Verschiebung);
Fig. 7    Hardware-Architektur einer Beschleunigerkarte für den Einsatz in dem erfindungsgemäßen Verfahren.

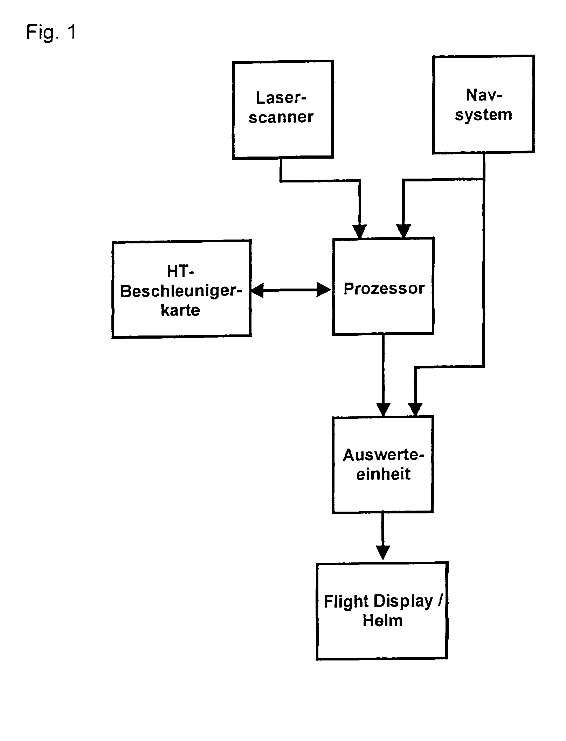

Bei der vorliegenden Erfindung handelt es sich um ein echtzeitfähiges Verfahren zur Leitungserkennung für tieffliegende Fluggeräte, z.B. Hubschrauber. Die zugehörige Systemarchitektur ist in Fig. 1 dargestellt. Das System besteht aus den Komponenten

- Entfernungsbildsensor (z.B. Laserscanner),
- Navigationssystem,
- Datenprozessor,
- Beschleunigerkarte für Hough Transformation (HT),
- Auswerteeinheit und Piloteninterface (z.B. Flight Display/ Head-Up Display/ Helm).

Als Sensor wird ein bildgebendes Front-End gewählt, welches die Szene aktiv abtastet und dessen Bildinformation aus Entfernungswerten besteht. Entfernungsbilder sind für die nachfolgende automatische Bildauswertung zur Leitungserkennung vorteilhaft. Als Sensoren kommen ein Laserscanner, der vorzugsweise im Infrarotbereich arbeitet, oder ein abbildendes Radar im mm-Wellenbereich in Frage. Obwohl das Radar im Hinblick auf Schlechtwetterbetrieb (Nebel) gewisse Vorteile besitzt, hat nach aktuellem Stand der Technik nur ein Laserscanner die gewünschte vertikale und laterale Bildauflösung. Beide Sensoren sind als aktive Systeme gleichermaßen für Tag- und Nachtbetrieb geeignet.

Ein geeigneter Laserscanner ist für große Reichweiten (>1 km) und hohe Bildauflösung (z.B. 0.5 horizontal x 0.1 Grad vertikal) auslegt. Er generiert (als Beispiel) Entfernungsbilder der Größe 64 x 384 Pixel mit einer Frame Rate von 4 Hz. Bei einer Entfernungsauflösung von 16 Bit erzeugt er an seinem Ausgang eine Datenrate in der Größenordnung von 2 Mbps (Mega Bits pro Sekunde). Für jedes Entfernungsbildpixel muss die räumliche Richtung, in die der Lasermesspuls ausgesandt wurde, eindeutig im sensorfesten Koordinatensystem bestimmbar sein, durch die Bauart des Scanners sowie evtl. durch zusätzliche Messungen während des Scanvorgangs.

Das Navigationssystem dient zur Bestimmung von Position und Lage des Fluggerätes. Eine typische Aufdatrate der Navigationsdaten ist 10 Hz. Jeder Entfernungsmesswert wird mit Hilfe der Koordinaten der zugehörigen räumlichen Scanrichtung und den aktuellen Positionsund Lageparametern des Fluggerätes in einen Szenenpunkt umgerechnet. Ein Szenenpunkt (im folgenden als Messpunkt bezeichnet) ist durch seine drei Ortskoordinaten in einem erdfesten Koordinatensystem festgelegt. Aus jedem Entfernungsbild entsteht auf diese Weise eine sog. erdfeste Messpunktwolke, aus der evtl. vorhandene Leitungen extrahiert werden können.

Für die Datenverarbeitung ist ein Prozessor von mittlerer Leistung zuständig. Auf diesem wird zunächst die oben genannte Transformation von Entfernungsmesswerten in Messpunkte durchgeführt, sowie im Anschluss daran eine Datenfilterung zur Elimination der Bodenpunkte. Auf die verbleibenden Messpunkte wird ein Leitungserkennungsverfahren angewendet, das auf der Methode der Hough-Transformation (HT) beruht.

Da eine Durchführung der Hough-Transformationen zu hohe Anforderungen an die Rechenleistung des Prozessors stellen würde, wird hierfür eine spezielle HT-Beschleunigerkarte eingesetzt. Auf diese Weise wird die Hough-Transformation zur Leitungserkennung auch mit flugtauglicher Prozessorhardware echtzeitfähig. Dieses rechenintensive Verfahren ist zur zuverlässigen Erkennung von Leitungen vorteilhaft. Es nutzt die volle dreidimensionale Information der Sensordaten. In horizontaler Richtung wird der gerade Verlauf von Leitungen zur Erkennung genutzt. Dieses Merkmal ist aber für sich genommen für eine sichere Erkennung nicht ausreichend, besonders, wenn Messpunkte fehlen oder verrauscht sind. Deshalb wird beim vorliegenden Verfahren das Durchhängen der Leitungsabschnitte nach dem COSH-Gesetz als zusätzliches Erkennungsmerkmal genutzt. Vor allem dieser Verfahrensschritt ist so rechenintensiv, dass eine spezielle Beschleunigerkarte erforderlich ist. Die Beschleunigerkarte ist speziell auf die bei der Leitungserkennung vorkommenden Hough-Transformationen zugeschnitten und kommt ohne "floating point" Operationen aus. Daraus ergibt sich ihre hohe Rechenleistung.

Das Ergebnis der Leitungserkennung sind 8 Parameter für jeden im Bild erkannten Leitungsabschnitt. Diese Parameter beschreiben jeweils den geometrischen Verlauf der Leitung: Drei Parameter definieren die vertikale Ebene, in der der betreffende Leitungsabschnitt verläuft, und fünf Parameter die zugehörige Kettenlinie mit Anfangs- und Endpunkten.

Diese Parameter dienen als Input zu einer Auswerteeinheit. Die Auswerteeinheit stellt fest, ob sich die einzelnen Leitungen in gefährlicher Nähe zur aktuellen Position des Fluggerätes oder zur vorgesehenen Flugbahn befinden. Gegebenenfalls löst sie einen akustischen Alarm aus oder leitet (über eine Schnittstelle zum Autopiloten) ein automatisches Ausweichmanöver ein. In vielen Fällen wird man das Ergebnis der Leitungserkennung auch dem Piloten grafisch darstellen, z.B. als horizontale Überlagerung auf einer digitalen Karte im Flight Display oder perspektivisch über die im Head-Up Display dargestellte Außensicht.

Für die Systemmodule Laserscanner, Navigationssystem, Prozessor und Auswerteeinheit können vorhandene und erprobte Einheiten eingesetzt werden. Diese Module müssen deshalb vorliegend nicht weiter beschrieben werden. Ausführlich erläutert werden dagegen im Folgenden:

- Die Datenverarbeitungsmethoden zur Leitungserkennung aus Entfernungsbildern auf Basis der Hough Transformation (Abschnitt 1). Diese Methoden liegen der auf dem Prozessor zu implementierenden Software zugrunde, sowie der mathematischen Funktion der Beschleunigerkarte.

- Die Beschleunigerkarte zur echtzeitfähigen Implementierung der obengenannten Verfahren (Abschnitt 2). Es wird detailliert dargestellt, welche mathematische Funktion die Karte erfüllt und mit welcher Hardwarearchitektur dies erreicht wird.

## 1. Verfahren

### 1.1 Übersicht Verfahrensablauf

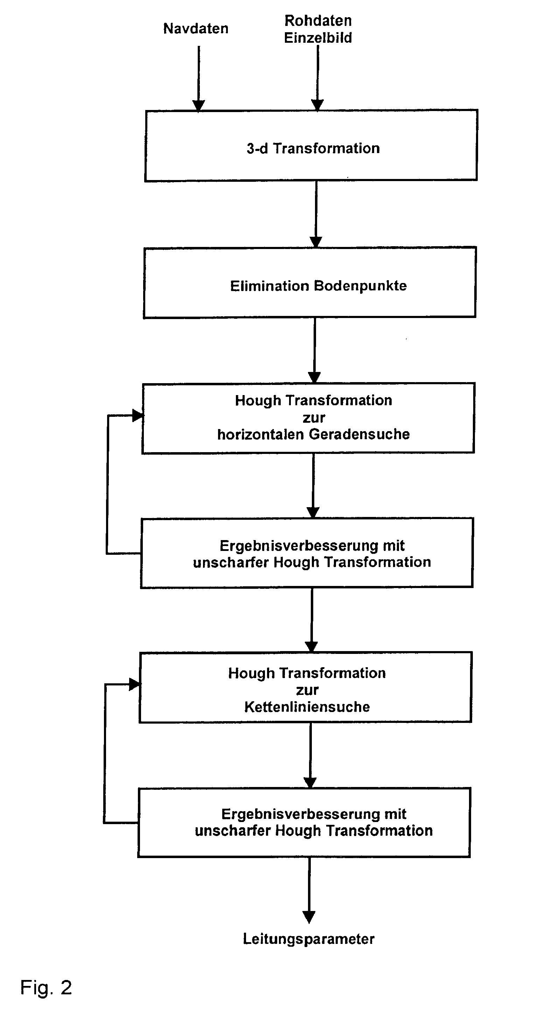

Das erfindungsgemäße Verfahren zur Leitungserkennung ist in Fig. 2 als Blockschaltbild dargestellt.

Inputdaten sind die Rohdaten (Entfernungswerte) des Sensors und die Navigationsdaten des Fluggerätes. Outputdaten sind die Parameter der Leitungen, die gefunden wurden. Das Verfahren arbeitet bevorzugt frameorientiert, d.h. jedes Entfernungsbild wird für sich verarbeitet und führt zu einer Anzahl erkannter Leitungen. Die frameorientierte Verarbeitung ist einfacher als eine kumulative Methode, bei der die Daten mehrerer Frames in einer Datenbank akkumuliert werden und die Leitungserkennung sich anschließend aus den Daten der Datenbank speist. Obwohl die kumulativen Methoden theoretisch zu qualitativ besseren (d.h. vollständigeren und rauschärmeren) Daten führen sollten, erfordert die Akkumulation in der Praxis hochgenaue Navigationsdaten und Zeitkorrelationen. Auf diesen Aufwand bei der Systemimplementierung kann beim vorliegenden Verfahren verzichtet werden, weil die Leitungserkennung sehr robust ist und daher mit Einzelframes auskommt. Das frameorientierte Verfahren führt außerdem zu geringeren Totzeiten bei der Leitungserkennung.

Die 3-d Transformation wandelt die Inputdaten in eine dreidimensionale Messpunktwolke um. Aus dieser Messpunktwolke müssen vor der eigentlichen Leitungserkennung die Bodenpunkte eliminiert werden. Dies ist aus zwei Gründen notwendig:

1. Die Datenrate am Eingang zum Leitungserkennungsmodul wird dadurch dramatisch gesenkt.

2. Die Bodenpunkte bilden in der Regel eine Fläche. In dieser Fläche lassen sich fast immer Kurven finden, die ihrem Verlauf nach eine Leitung darstellen könnten. Diese "virtuellen" Leitungen sollen jedoch nicht gefunden werden.

Zur Elimination der Bodenpunkte lassen sich verschiedene, etablierte Verfahren einsetzen, die als solche nicht Gegenstand dieser Erfindung sind. Diese Verfahren unterscheiden sich hinsichtlich Aufwand und Güte. Im einfachsten Fall können bei bekannter Höhe des Fluggerätes einfach alle Messpunkte unterhalb einer bestimmten Höhenschwelle ausgeblendet werden. Dies ist deshalb möglich, weil die relative Höhe der Messpunkte zum Hubschrauber nach der 3-d Transformation bekannt ist. Die Höhenschwelle kann nach vorne, in Flugrichtung, zunehmend angehoben werden, um einem unebenen Geländeverlauf gerecht zu werden. Sollte die Höhenschwelle in großer Entfernung vom Fluggerät so hoch sein, dass auch Leitungspunkte darunter fallen, wäre dies nicht kritisch, eben wegen der Entfernung. In einem der folgenden Frames würden diese Punkte, bei abnehmender Entfernung zum Hubschrauber, schließlich über der Schwelle liegen. Der Rechenaufwand dieses Verfahrens ist vernachlässigbar.

Ein aufwendigeres und leistungsfähigeres Verfahren besteht in der Implementierung eines Bodenerkennungsverfahrens. Eine Bodenerkennung ist prinzipiell deshalb möglich, weil die Gesamtheit der Bodenpunkte in der Regel eine "kontinuierliche" Fläche bilden, die mit bekannten Methoden gefunden werden kann. Die Hough- Transformation stellt z.B. eine solche Methode dar, weil sich mit ihr beliebige, näherungsweise ebene Flächen finden lassen. (Natürlich nimmt die Transformation explizit eine andere Gestalt an als bei der zur Leitungserkennung.) Da im vorliegenden Kontext die Bodenerkennung nur dazu verwendet wird, alle Bodenpunkte zu eliminieren, empfiehlt sich aber eher eine weniger rechenintensive Methode (z.B. P. Lux, C. Schaefer: Range imaging for autonomous navigation of robotic land vehicles. Signal Processing 22, 1991, S. 299-311), die nicht eine explizite Parameterisierung des Bodenverlaufes liefert, sondern die lediglich alle nicht zum Boden gehörigen Punkte identifiziert.

Nach der Elimination der Bodenpunkte bleibt eine Teilmenge der ursprünglichen Messpunktwolke des aktuellen Frames übrig, auf die das eigentliche, houghbasierte Leitungserkennungsverfahren angewendet wird. Von den ursprünglich ca. 25000 Messpunkten bleiben dabei in der Regel höchstens einige Hundert übrig. Im Hinblick auf die Echtzeitanforderungen muss hier eine obere Grenze für die Zahl der zur verarbeitenden Messpunkte festgelegt werden, z.B. 250 oder 500 Punkte. Sollte nach der Bodenelimination ausnahmsweise mehr als diese Zahl von Messpunkten übrigbleiben, müssen weitere Punkte eliminiert werden. Dies kann z.B. nach einem Zufallsprinzip geschehen. In diesem Fall wird eine Leitung anschließend "ausgedünnt" erscheinen, weil einige Leitungspunkte willkürlich eliminiert wurden. Wegen der Robustheit des Leitungserkennungsverfahrens ist dies aber höchstens bei Leitungen, die mit sehr wenigen Messpunkten vertreten sind, kritisch für die Erkennung. Dies sind in der Regel Leitungen in größerer Entfernung, die in einem späteren Frame mit mehr Messpunkten erneut auftauchen. Die genannte Beschränkung der Datenrate wird sich also in einer Reduktion der Erkennungsreichweite des Systems äußern. Umgekehrt kann man diese Reichweite bei der Leitungserkennung durch Bereitstellung von mehr Rechenleistung erhöhen. Es gibt also einen natürlichen "Trade-off" zwischen Prozessorleistung einerseits und Erkennungsreichweite andererseits. Alternativ zur zufälligen Elimination von Messpunkten können Punkte einer bestimmten Höhe oder Entfernung bevorzugt werden und von der Elimination zunächst ausgeschlossen bleiben.

Ausgangspunkt für die sich anschließenden Hough-Transformationen (HT) ist also eine beschränkte Menge von 3-d Messpunkten. Die erste HT wertet nur die horizontalen, (x,y)-Komponenten der Messpunkte aus, um die Geradenverläufe in dieser Punktmenge zu identifizieren (Abs. 1.2). Horizontale Geraden sind potentielle Verlaufsrichtungen von Leitungen. Später, bei der sog. Kettenliniensuche, werden alle vertikalen Ebenen, die zu den hier gefundenen Geraden gehören, auf Kettenlinienstücke hin untersucht (Abs. 1.3). D.h. es werden alle Messpunkte, die in oder nahe bei einer solchen Ebene liegen, in diese Ebene projiziert, und der resultierende Satz von 2-d Messpunkten wird mittels der zweiten HT nach Kettenlinienstücken abgesucht.

Die HT ist vor allem bekannt als Verfahren zur Geradensuche in einem unstrukturierten Satz von Punkten in der Ebene. Sie ist tatsächlich sehr viel allgemeiner anwendbar, z.B. auch zur Suche von sog. Kettenlinienstücken. Dabei nimmt sie mathematisch-formal eine andere Gestalt an, nur das Verfahrensprinzip der Histogrammbildung ist gleich. Ihre größte Schwäche, die eines hohen Rechenzeitbedarfs, wird hier durch den vorgeschlagenen Einsatz der anwendungsspezifischen HT-Beschleunigerkarte beseitigt.

Die HT in ihrer konventionellen Form als "scharfe" Transformation führt bei der in der Datenverarbeitung unvermeidlichen Diskretisierung zu Fehlern, die hier durch Einsatz der sog. "unscharfen" Hough Transformation beseitigt werden. Die unscharfe HT verbessert das mit der scharfen HT gewonnene Ergebnis und erfordert relativ wenig Rechenzeit. Sie kann deshalb auf dem Prozessor in Software implementiert werden. Sie ist für Ergebnisse mit verringerten Genauigkeitsanforderungen verzichtbar.

Nach Berechnung der Houghtransformierten stellt sich in der Praxis die Frage, wie diese auszuwerten sei. Insbesondere führt eine simple Auswertung oftmals zu Auflösungsproblemen bei entdeckten Objekten. Diese Problematik wird vorliegend durch eine iterative Methode gelöst, die in Abs. 1.2.3 detailliert erläutert wird.

**1.2 Hough Transformation zum Auffinden horizontaler Geraden**

**1.2.1 Parametrisierung**

Es seien I Messpunkte

$$(1\text{-}1) \qquad \{(x_i, y_i) \mid i = 0, ..., I\text{-}1\}$$

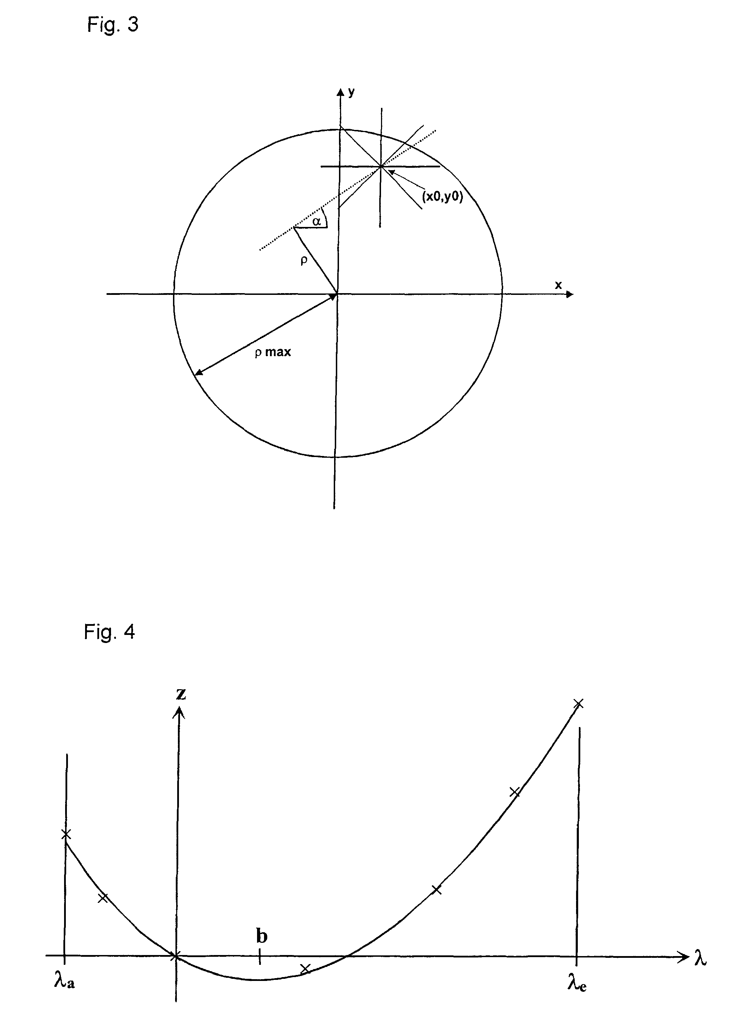

in der horizontalen x,y-Ebene gegeben, deren Abstand vom Koordinatenursprung einen Maximalwert $\rho_{max} > 0$ nicht überschreiten. Zur Geradenfindung unter diesen Messpunkten soll eine HT durchgeführt werden.
In diesem Zusammenhang ist für jeden Messpunkt die einparametrige Schar aller Geraden zu betrachten, die diesen Messpunkt schneiden. Diese Schar ist in Fig. 3 für den Messpunkt $(x_0, y_0)$ beispielhaft dargestellt. Zunächst geht es um die Wahl einer geeigneten Parametrisierung der Geradenschar.
Die übliche Parametrisierung einer Geraden y=mx+b mit Achsenabschnitt b und Steigung m hat den Nachteil, dass der Fall m=∞ numerisch nicht handhabbar ist. Deshalb werden hier der Richtungswinkel $\alpha$ der Geraden zur x-Achse und der Abstand $\rho$ der Geraden zum Ursprung als Geradenparameter gewählt (Fig. 3). Eine durch $(\alpha, \rho)$ parametrisierte Gerade $\vec{r}(\lambda)$ hat die Darstellung

$$(1\text{-}2) \qquad \vec{r}(\lambda) = \begin{pmatrix} x(\lambda) \\ y(\lambda) \end{pmatrix} = \rho \begin{pmatrix} -\sin\alpha \\ \cos\alpha \end{pmatrix} + \lambda \begin{pmatrix} \cos\alpha \\ \sin\alpha \end{pmatrix} \quad (-\infty < \lambda < \infty)$$

($\lambda$ ist der Laufparameter längs der Geraden.) Bei Vorgabe eines Messpunktes $(x_0, y_0)$ gibt es zu jedem Winkelparameter $\alpha$ genau einen Wert des Abstandsparameters $\rho = \rho(\alpha)$, für den die durch $(\alpha, \rho(\alpha))$ parametrisierte Gerade den Messpunkt $(x_0, y_0)$ schneidet. Wie sich leicht zeigen lässt, ist

$$(1\text{-}3) \qquad \rho(\alpha) = -x_0 \sin\alpha + y_0 \cos\alpha$$

Mit $r_0 = \sqrt{x_0^2 + y_0^2}$ und geeigneter Phase $\alpha_0$ gilt unter Verwendung von Polarkoordinaten

$$(1\text{-}4) \qquad \begin{aligned} x_0 &= r_0 \cos\alpha_0 \\ y_0 &= r_0 \sin\alpha_0 \end{aligned}$$

$y_0 = r_0 \sin\alpha_0$
Damit schreibt sich (1-3) alternativ:

$$(1\text{-}5) \qquad \rho(\alpha) = -r_0 \sin(\alpha - \alpha_0) \qquad (-\frac{\pi}{2} \le \alpha < \frac{\pi}{2})$$

**1.2.2 Konventionelle HT**

Im Houghraum mit den Parametern $\alpha, \rho$ führt die HT eines beliebigen Messpunktes $P_i = (x_i, y_i)$ mit $x_i = r_i \cos\alpha_i$, $y_i = r_i \sin\alpha_i$ und $f_i(\alpha) = -r_i \sin(\alpha)$ zum Funktionsgraphen

$$(1\text{-}6) \qquad \Gamma_i = \left\{ (\alpha, \rho) \mid -\frac{\pi}{2} \le \alpha < \frac{\pi}{2}, \rho = f_i(\alpha - \alpha_i) \right\}$$

Die gesuchte, im Houghraum definierte Histogrammfunktion $\eta(\alpha,\rho)$ legt die Funktionsgraphen aller Messpunkte übereinander und lautet daher

$$(1\text{-}7) \qquad \eta(\alpha, \rho) = \sum_{i=0}^{I-1} \delta(\rho - f_i(\alpha - \alpha_i))$$

Hierbei ist per definitionem

$$(1\text{-}8) \qquad \delta(0) = 1 \ \text{und} \ \delta(x) = 0 \ \text{für alle } x \ne 0$$

eine Art Deltafunktion.

Gesucht ist das Maximum $(\alpha_{max}, \rho_{max})$ von $\eta(\alpha,\rho)$:

$$(1\text{-}9) \qquad \eta(\alpha_{max}, \rho_{max}) = \max_{\substack{-\pi/2 \le \alpha < \pi/2 \\ -\rho_{max} < \rho < \rho_{max}}} \eta(\alpha, \rho)$$

Der Parametersatz $(\alpha_{max}, \rho_{max})$ gehört dann nämlich zu derjenigen Geraden, die die meisten Messpunkte schneidet. Dies ist das Histogrammprinzip der Hough-Transformation.

In der Praxis ist zur Bestimmung des Maximums eine Diskretisierung des $(\alpha,\rho)$-Parameterraums erforderlich, was durch Verwendung von Bins der einheitlichen Größe $\Delta\alpha \cdot \Delta\rho$ gelingt. Die Bins sind durch ihre Mittelpunkte $(\alpha_m, \rho_n)$ gekennzeichnet. Aus der kontinuierlichen Funktion $\eta(\alpha,\rho)$ wird eine diskrete Funktion $H(\alpha_m, \rho_n)$. Die Berechung und Auswertung dieser Funktion übernimmt die Beschleunigerkarte. In Abschnitt 1.2.4 ist erläutert, wie die Schnittstelle zur Karte in diesem Fall aussieht. Mit $(\alpha_M, \rho_N)$ sei im folgenden das Maximum der diskreten Histogrammfunktion $H(\alpha_M, \rho_N)$ bezeichnet:

$$(1\text{-}10) \qquad H(\alpha_M, \rho_N) = \max_{m,n} H(\alpha_m, \rho_n)$$

### 1.2.3 Unscharfe HT und Iteration

Das auf solche Weise erhaltene diskrete Ergebnis $(\alpha_M, \rho_N)$ ist jedoch noch verbesserungswürdig, aus zwei Gründen:

1. Das Ergebnis hängt von der Wahl der Diskretisierungsparameter $\Delta\alpha$, $\Delta\rho$ ab.
2. Der Ansatz einer scharfen Hough-Transformation nach (1-7) berücksichtigt nicht die stets vorhandenen Messßfehler bei den Messpunktkoordinaten $(x_i, y_i)$.

Hier schafft eine unscharfe Hough Transformation Abhilfe, indem sie in die (1-7) verwendete Deltafunktion $\delta(x)$ durch eine Gaußverteilung ersetzt. Es gehen also für jeden Messpunkt nicht nur Parameterpaare $(\alpha,\rho)$ in die Hi-

stogrammfunktion ein, deren zugehörige Geraden den Messpunkt exakt schneiden, sondern auch solche, die ihn fast schneiden. Auf diese Weise wird dem Umstand Rechnung getragen, dass der Messpunkt aufgrund eines Messfehlers in Wirklichkeit gegenüber den vorliegenden Koordinatenwerten ($x_i$, $y_i$) etwas verrückt sein könnte.

Unter Einbeziehung dieses statistischen Aspekts lässt sich die scharfe Hough-Transformierte $\eta(\alpha,\rho)$ nach (1-7) in eine unscharfe Hough-Transformierte $h(\alpha,\rho)$ umwandeln:

$$(1\text{-}11) \qquad h(\alpha,\rho) = \sum_{i=0}^{I-1} \exp\left(\frac{-[\rho - f_i(\alpha - \alpha_i)]^2}{2\sigma^2}\right)$$

Dabei bezeichnet $\sigma$ die Standardabweichung bei der Messung der Koordinaten $x_i$ bzw. $y_i$.

Ein gegenüber (1-9) und (1-10) verbessertes Ergebnis $(\bar{\alpha},\bar{\rho})$ für die gesuchten Geradenparameter erhält man also durch Maximumssuche bei der unscharfen HT:

$$(1\text{-}12) \qquad h(\bar{\alpha},\bar{\rho}) = \max_{\substack{-\pi/2 \le \alpha < \pi/2 \\ -\rho_{max} < \rho < \rho_{max}}} h(\alpha,\rho)$$

Dadurch, dass $h(\alpha,\rho)$ eine analytische - also glatte - Funktion darstellt, lässt sich das Maximum auch mit den Methoden der Differentialrechnung bestimmen. Insbesondere ist für die numerische Lösung der Optimierungsaufgabe (1-12) keine Diskretisierung des Parameterraums erforderlich, so dass eine eindeutige Lösung berechnet werden kann, die von keiner speziellen Wahl der Diskretisierungsparameter abhängt.

Für die praktische Lösung der Aufgabe (1-11 ) ist es dennoch erforderlich, einen brauchbaren Schätzwert für $(\bar{\alpha},\bar{\rho})$ zu haben. Dieser wird durch $(\alpha_M, \rho_N)$ aus der Scharfen HT geliefert, von der Beschleunigerkarte. Die Verbesserung $(\alpha_M, \rho_N) \to (\bar{\alpha},\bar{\rho})$ ist im Gegensatz zur Generierung des Schätzwertes $(\alpha_M, \rho_N)$ nicht rechenzeitintensiv und kann deshalb auf dem Hostprozessor der Beschleunigerkarte durchgeführt werden.

Die Suche nach horizontalen Geraden wird wie folgt fortgesetzt. Der soeben erhaltene Parametersatz $(\bar{\alpha},\bar{\rho})$ definiert eine Gerade, die gefunden wurde. Natürlich kann es noch weitere Geraden geben, die gefunden werden müssen. Zunächst wird festgestellt, welche Messpunkte zu der eben gefundenen Geraden gehören, z.B. durch Abstandsberechnung der in Frage kommenden Messpunkte zur Geraden. Diese Messpunkte werden aus dem aktuellen Messpunktsatz gelöscht, und die Prozedur der Geradensuche wird wiederholt. Jede Iteration führt zu einer weiteren Geraden. Die Geraden werden jedoch sukzessive von weniger Messpunkten gestützt. Die Geradensuche ist dann zuende, wenn zu der zuletzt gefundenen Geraden nicht mehr als M>0 Messpunkte gehören. Der Parameter M wird vom Anwender gesetzt und gibt an, wieviele Punkte auf den gesuchten Geraden mindestens liegen müssen.

In der Praxis muss aber nach der ersten gefundenen Geraden nicht die ganze Berechnung der Histogrammfunktion von Anfang an (mit der nun reduzierten Zahl von Messpunkten) wiederholt werden. Es bezeichne $\eta(\alpha,\rho)$ die Histogrammfunktion bei der ersten Geradensuche und $\eta_1(\alpha,\rho)$ die bei der zweiten. $\eta_1(\alpha,\rho)$ geht aus $\eta(\alpha,\rho)$ nach folgender Gleichung hervor:

$$(1\text{-}13) \qquad \eta_1(\alpha,\rho) = \eta(\alpha,\rho) - \sum_{\substack{aussortierte \\ Me\beta punkte}} \delta[\rho - f_i(\alpha)]$$

M.a.W., der Histogrammfunktion müssen die der ersten Geraden zugeschlagenen Messpunkte nur mit negativem Vorzeichen nochmals hinzuaddiert werden. Dies gelingt mit der Beschleunigerkarte sehr effizient. Das alte Histogramm $\eta(\alpha,\rho)$ ist noch im Speicher der Karte vorhanden. Es muss also lediglich um die aussortierten Messpunkte erweitert werden, allerdings mit negativem Vorzeichen bei der Summation. (Dieser Modus wird bei der Implementierung vorgesehen, s. Abs. 2.3.1). Der Rechenzeitaufwand bei der Generierung von $\eta_1(\alpha,\rho)$ entspricht also der Histogrammerstellung aus so vielen Messpunkten, wie eben aussortiert wurden, und nicht aller nach der Aussortierung noch vorhandenen Messpunkte. In der Beschleunigerkarte ist die Summe der Rechenzeiten bei der Bestimmung aller Geraden, die nach der ersten noch zu finden sind, somit etwa gleich der Rechenzeit, die bei der ersten Geradenfindung auftrat. Diese ist natürlich proportional zur Zahl der Messpunkte insgesamt.

### 1.2.4 Schnittstelle zur Beschleunigerkarte

Die in Abs. 2.2 erklärte allgemeine Funktion der HT-Beschleunigerkarte soll auf das vorliegende Problem der horizontalen Geradensuche angewandt werden. Dazu müssen folgende Größen der Karte festgelegt werden:

- Parameterraum,
- diskrete Kurvenschar,
- für jeden Messpunkt: Zuordnung einer Scharkurve und Zuordnung von Achsenabschnittsparametern.

### Parameterraum

Die Parameter im Houghraum sind

$$(1\text{-}14) \qquad -\frac{\pi}{2} \leq \alpha < \frac{\pi}{2} \; ; \; -\rho_{max} < \rho < \rho_{max}$$

mit Diskretisierungsparametern $\Delta\alpha$, $\Delta\rho$.

### Kurvenschar

Für $l = 0, ..., L\text{-}1$ stellt die Folge von Zahlen

$$(1\text{-}15) \qquad \rho_l = l \cdot \Delta\rho$$

eine Diskretisierung der $\rho$-Achse dar. Dabei sei

$$(1\text{-}16) \qquad (L\text{-}1) \, \Delta\rho = \rho_{max}$$

Für einen beliebigen Messpunkt $(x_i, y_i)$ sei wieder $x_i = r_i \cos\alpha_i$, $y_i = r_i \sin\alpha_i$ die Darstellung in Polarkoordinaten. Mit der Zuordnung (es bezeichnet (für reelles $x$ ) $n = \lfloor x \rfloor$ die größte ganze Zahl mit $n \leq x$ )

$$(1\text{-}17) \qquad l = l(i) = \left\lfloor \frac{r_i + \dfrac{1}{2}}{\Delta\rho} \right\rfloor$$

ist dafür gesorgt, dass $\rho_{l(i)}$ den Wert $r_i$ so genau annähert wie dies im Rahmen der vorgegebenen Diskretisierung möglich ist. Die von der Karte geforderte Kurvenschar $f_l (\alpha)$ ist durch

$$(1\text{-}18) \qquad f_l = -\rho_l \cdot \sin(\alpha) \qquad (l = 0... L - 1)$$

gegeben.

### Zuordnung zu Messpunkten

Damit die Karte die gewünschte Histogrammfunktion (1-7) berechnet, ist einem Messpunkt $P_i = (x_i, y_i)$ die Kurve $f_{l(i)}(\alpha{-}\alpha_i)$ zuzuordnen. (Achsenabschnitte der $\rho$-Achse sind nicht erforderlich.) Die Karte trägt dann die jeweiligen Funktionsgraphen

$$(1\text{-}19) \qquad \Gamma_i = \left\{ \left( \alpha, -\rho_{l(i)} \sin(\alpha - \alpha_i) \right) \mid -\frac{\pi}{2} \le \alpha < \frac{\pi}{2} \right\}$$

in den Parameterraum ein und summiert das Histogramm auf.

Die Diskretisierung der Messpunktkoordinaten und Kurvenschar in Adresswerte erfolgt wie in Abs. 2.2.2 beschrieben.

### 1.3 Hough Transformation zur Kettenliniensuche

### 1.3.1 Parametrisierung

Nachdem mit der vorausgegangenen HT die für Leitungen in Frage kommenden horizontalen Verlaufsgeraden bestimmt wurden, muss nun in jeder zugehörigen vertikalen Ebene nach Punkten gesucht werden, die sich zu Leitungsabschnitten verbinden lassen. Gegenstand dieses Absatzes ist das Problem, in einer gegebenen vertikalen $\lambda$,z-Ebene mit Messpunkten $P_i = \{\lambda_i,\ z_i)$ nach Kettenlinien zu suchen (Fig. 4). Die $\lambda$-Achse folgt hierbei der ursprünglichen Verlaufsgeraden. Die z-Achse definiert die vertikale Achse.

In Fig. 4 ist ein Leitungsabschnitt in der Seitenansicht dargestellt. Es bezeichnen $\lambda_a$ und $\lambda_e$ Beginn bzw. Ende des Leitungssegmentes. Im Falle einer Leitung ohne Biegesteifigkeit ist ein Leitungsabschnitt bekanntlich wie folgt parametrisiert:

$$(1\text{-}20) \qquad z(\lambda) = a\cosh\left( \frac{\lambda - b}{a} \right) + c \qquad (\lambda_a < \lambda < \lambda_e)$$

Hierbei stellt b die Lage des Tiefpunktes der Leitung auf der $\lambda$-Achse dar, und c parametrisiert die Leitungshöhe (a+c ist die z-Koordinate des Leitungstiefpunktes). Der Parameter a beschreibt, wie stark die Leitung durchhängt. Jedes Parametertripel (a,b,c) definiert eine bestimmte Kettenlinie.

Es gibt also einen dreidimensionalen Parameterraum mit den Koordinaten (a, b, c), in welchen die Hough-Transformation die einzelnen Messpunkte als Flächen abbildet und in welchem die Histogrammfunktion definiert ist.

Zur Vereinfachung schreiben wir gelegentlich

$$(1\text{-}21) \qquad z(\lambda) = g_a\ (\lambda - b) + c$$

mit

$$(1\text{-}22) \qquad g_a(x) = a\cosh\left( \frac{x}{a} \right)$$

### 1.3.2 HT zur Kettenliniensuche

Für einen gegebenen Messpunkt $P_i = (\lambda_i,\ z_i)$ liegen alle Parametersätze (a, b, c), deren zugeordnete Kurve

$$(1\text{-}23) \qquad z = g_a(\lambda - b) + c$$

den Messpunkt schneiden, auf folgender Fläche im (a, b, c)-Koordinatensystem:

$$(1\text{-}24) \qquad \Gamma_i = \{(a, b, c) \mid a_{min} < a < a_{max}, \; b_{min} < b < b_{max}, \; c = c_i (a, b) = z_i - g_a (\lambda_i - b)\}$$

Dabei legt $b_{min} < \lambda < b_{max}$ denjenigen horizontalen Bereich in der aktuellen vertikalen Ebene fest, in dem Tiefpunkte gesuchter Leitungssegmente liegen sollen. Dieser Bereich wird vom Anwender definiert. Eine mögliche, sinnvolle Wahl ist durch

$$(1\text{-}25) \qquad b_{min} = \min_i \{\lambda_i\}, \; b_{max} = \max_i \{\lambda_i\}$$

gegeben.

Der zulässige Bereich des Durchhängeparameters $a_{min} < a < a_{max}$ muss vom Anwender vorgegeben werden, den physikalischen Gegebenheiten der zu findenden Leitungen entsprechend.

Die Schranken $(c_{min}, c_{max})$ des Parameterraumes in c-Richtung sind so festzulegen, dass für die gegebenen Messpunkte, für die zulässigen Werte von a und für die getroffene Wahl von $b_{min}$ und $b_{max}$ keiner der Graphen $\Gamma_i$ den Parameterraum nach oben oder unten (also in Richtung der c-Achse) verlässt.

Mit

$$(1\text{-}26) \qquad f_a(b) = -g_a(-b) = -g_a(b) = -a \cosh\left(\frac{b}{a}\right)$$

lautet die zugehörige Histogrammfunktion

$$(1\text{-}27) \qquad \eta(a,b,c) = \sum_{i=0}^{I-1} \delta\left(c - \left[z_i - g_a(\lambda_i - b)\right]\right) = \sum_{i=0}^{I-1} \delta\left(c - \left[f_a(b - \lambda_i) + z_i\right]\right)$$

Zu bestimmen ist das Maximum $(a_0, b_0, c_0)$ im dreidimensionalen Parameterraum:

$$(1\text{-}28) \qquad \eta(a_0, b_0, c_0) = \max_{\substack{a_{min} < a < a_{max} \\ b_{min} < b < b_{max} \\ c_{min} < c < c_{max}}} \eta(a, b, c)$$

Der Parametersatz $(a_0, b_0, c_0)$ gehört dann nämlich zu derjenigen Kettenlinie, die die meisten Messpunkte schneidet (Histogrammprinzip der Hough-Transformation).

In der Praxis ist zur Bestimmung des Maximums wieder eine durch Δa, Δb, Δc gegebene Diskretisierung des Parameterraums erforderlich. Für alle diskreten Werte

$$(1\text{-}29) \qquad a_j = a_{min} + j \cdot \Delta a \; (j = 0 \dots J\text{-}1; \; (J\text{-}1)\Delta a = a_{max} - a_{min})$$

des Durchhängeparameters a werden separate, zweidimensionale, diskrete Histogrammfunktionen $H_j(b_m, c_n)$, eingeführt, die den kontinuierlichen, zweidimensionalen Histogrammfunktionen $\eta(a_j, b, c)$ für festes $a=a_j$ entsprechen:

$$(1\text{-}30) \qquad H_j(b_m, c_n) \leftrightarrow \eta(a_j, b, c)$$

Die Berechung und gleichzeitige Speicherung aller Funktionen $H_j(b_m, c_n)$ übernimmt die Beschleunigerkarte. Bei der Maximumssuche wird dann nicht - wie bei der horizontalen Leitungssuche - nur eine zweidimensionale Funktion ausgewertet, sondern es werden alle J Funktionen zum Vergleich herangezogen. Die detaillierte Beschreibung der Schnittstelle zur Karte ist in Abschnitt 1.3.3 erläutert.

### 1.3.3 Unscharfe HT und Iteration

Mit dem Auffinden einer Lösung $(a_{j0}, b_0, c_0)$, die durch die Beschleunigerkarte effizient gelingt, ist die Auswertung der Messpunkte in der untersuchten vertikalen Ebene aber noch nicht beendet. Das Ergebnis ist zunächst wegen des Diskretisierungsfehlers noch verbesserungswürdig, mittels der unscharfen Hough-Transformation, und zweitens sind nacheinander noch weitere, evtl. vorhanden Leitungssegmente aufzufinden. Die Vorgehensweise ist dabei im Prinzip die gleiche wie in Abs. 1.2.3 und wird deshalb nicht wiederholt.

### 1.3.4 Schnittstelle zur Beschleunigerkarte

**Parameter**

Die Parameter im Houghraum sind

$$(1\text{-}31) \qquad b_{min} < b < b_{max}, \; c_{min} < c < c_{max}$$

mit Diskretisierungsparametern $\Delta b$, $\Delta c$.

**Kurvenschar**

Es sei

$$(1\text{-}32) \qquad a_j = a_{min} + j \cdot \Delta a \; (j = 0...J - 1; \; (J - 1)\Delta a = a_{max} - a_{min})$$

eine Diskretisierung des Durchhängeparameters a. Es wird folgende Kurvenschar festgelegt:

$$(1\text{-}33) \qquad c = f_j(b) = -a_j \cosh\left(\frac{b}{a_J}\right) \qquad (j = 0...J - 1)$$

**Zuordnung von Messpunkten**

Jedem Messpunkt $P_i = (\lambda_i, z_i)$ wird dieselbe Scharkurve zu geordnet. Dafür wird eine zweidimensionale HT nacheinander J Mal an allen Messpunkten durchgeführt, mit der Scharkurve $c = f_j(b - \lambda_i) + z_i$ (dreidimensionaler Modus der Karte). Die Achsenabschnitte auf der b- und c-Achse sind also $\lambda_i$ bzw. $z_i$.

### 2. Beschleunigerkarte für schnelle HT

### 2.1 Übersicht

Im letzten Abschnitt wurde der für die Leitungserkennung vorgesehene Verfahrensablauf dargestellt, der sich wesentlich auf die konventionelle Hough-Transformation in zwei Varianten abstützt. Für die Implementierung der Hough-Transformation als echtzeitfähige Software sind die derzeitigen Standardprozessoren nicht schnell genug. Andererseits sind für den Kern der konventionellen Hough-Transformation keine aufwendigen Floating Point Operationen erforderlich. Im Hinblick auf Echtzeitfähigkeit der Datenverarbeitungshardware bei minimaler Masse und Stromverbrauch ist deshalb die Entwicklung einer Beschleunigerkarte erforderlich, die speziell auf die bei der konventionellen Hough-Transformation erforderlichen Funktionen zugeschnitten ist.

Der vorliegende Abschnitt beschreibt diese Beschleunigerkarte. Zunächst wird in Abs. 2.2.1 die mathematische Funktion der Karte definiert. Mit der definierten Funktion lassen sich beide erforderlichen Hough-Transformationen durchführen, sowohl die HT zur Geradenerkennung in der Horizontalen (Abs.1.2) als auch die HT in der Vertikalen zur Erkennung einer durchhängenden Leitung (Abs.1.3). In Abs. 2.2.2 und 2.2.3 wird diese mathematische Funktion auf einen einfachen Algorithmus reduziert, der nur noch in der Adressierung von Speicherzellen sowie in der Addition einer 1 zu oder in der Subtraktion einer 1 von dem adressierten Datenwort besteht. Schließlich wird in Abs. 2.3 eine Architektur dargestellt, mit der dieser Algorithmus effizient in Hardware implementiert werden kann. Die im Folgenden beschriebenen HT-Beschleunigerkarte kann die Hough-Transformation in beiden erforderlichen Varianten durchführen.

## 2.2 Logische Funktion

### 2.2.1 Mathematische Aufgabenstellung

Die mathematische Funktion der Beschleunigerkarte wird im folgenden der einfacheren Lesbarkeit halber zunächst kontinuierlich formuliert. Die numerische Ausführung ist dagegen selbstverständlich *diskret* (vgl. Abs. 2.2.2 und 2.2.3).

**Vorgaben:** Gegeben sind ein Messpunktsatz, ein zweidimensionaler, beschränkter Parameterraum und eine diskrete Kurvenschar. Jedem Messpunkt wird ein Kurve aus der Schar zugeordnet; zudem kann die zugeordnete Kurve im Parameterraum noch Messpunktabhängig horizontal oder vertikal verschoben werden. Der Parameterraum ist so dimensioniert, dass kein Kurvengraph ihn nach oben oder unten verlässt; ein nach links oder rechts herausragender Graph wird dagegen am seitlichen Rand des Parameterraumes abgeschnitten.

Die **mathematische Formulierung** dieser Vorgaben lautet:

Parameter $\quad p, q$

Parameterraum $\quad p_a \leq p \leq p_b \,;\, q_a \leq q \leq q_b$

Kurvenschar $\quad q = f_l(\,p)$ *mit Definitionsbereich* $s_l \leq p \leq t_l$ ($l = 0,1,...,L-1$)

Messpunkte $\quad P_i$ ($i = 0, 1, ..., I-1$)

Jedem Messpunkt werden eindeutig zugeordnet:

*Kurvenindex l(i)*
*Achsenabschnitte $p_i, q_i$*
*Kurvengraph* $\Gamma_i = \{(p, f_{l(i)}(p-p_i) + q_i)| \max\{p_a, s_{l(i)} + p_i\} + p_l) \leq p \leq \min\{p_b, t_{l(i)} + p_i\}\}$

Der Kurvengraph liegt vollständig im Parameterraum, d.h.

$$q_a \leq f_{l(i)}(p - p_i) + q_i \leq q_b$$

*für alle zulässigen p*

Aufgabenstellung: Es sind die Graphen aller Messpunkte in den Parameterraum einzutragen; anschließend ist an jedem Punkt des Parameterraums zu zählen, wie viele Messpunktgraphen diesen Parameterpunkt schneiden. Gesucht ist derjenige Punkt, an dem sich die meisten Graphen schneiden.

Mathematisch formuliert heißt dies, es ist die Funktion

$$H(p,q) = \sum_{i=0}^{I-1} \delta\left(q - \left[f_{l(i)}(p - p_i) + q_i\right]\right)$$

im gesamten Parameterraum $p_a \leq p \leq p_b$ ; $q_a \leq q \leq q_b$ auszuwerten. Hierbei ist wie gehabt

$$\delta(0) = 1 \, und \, \delta(x) = 0 \, \textit{für alle } x \neq 0$$

Endergebnis ist ein Punkt $(\bar{p},\bar{q})$, für den im gesamten Parameterraum gilt:

$$H(\bar{p},\bar{q}) = \max{}_{p,q} \{H(p,q)\}$$

In einigen Fällen (dreidimensionale HT) besteht die Kurvenschar nur aus einer einzigen Kurve *f*. Dafür soll die Hough-Transformation für alle Messpunkte mehrfach durchgeführt werden, aber jeweils mit neuem Parameterraum und mit neuer Kurve $f_j$. Diese Sequenz von separaten Transformationen wird mit dem Index *j* ($0 \leq j \leq J$ -1) versehen, und zu bestimmen sind alle Funktionen

$$H_j(p,q) = \sum_{i=0}^{I-1} \delta\left(q - \left[f_j\left(p - p_i\right) + q_i\right]\right)$$

Gesuchtes Resultat ist ein Punkt $(\bar{p},\bar{q})$ und ein Parameter $\bar{j}$, für die gilt:

$$H_{\bar{j}}(\bar{p}, \bar{q}) = \max{}_{p, q, j} \{H_j(p, q)\}$$

### 2.2.2 Diskretisierung

Für die diskrete Umsetzung der kontinuierlich dargestellten Aufgabenstellung nach Abs. 2.2.1 sind Diskretisierungsparameter $\Delta p > 0$, $\Delta q > 0$ festzulegen. Die Parameter $p_a$, $p_b$, $p_i$, $s_l$, $t_l$ sind immer als ganzzahlige Vielfache von $\Delta p$ zu wählen, ebenso sind die Parameter $q_a$,$q_b$ als ganzzahlige Vielfache von $\Delta q$ zu wählen.

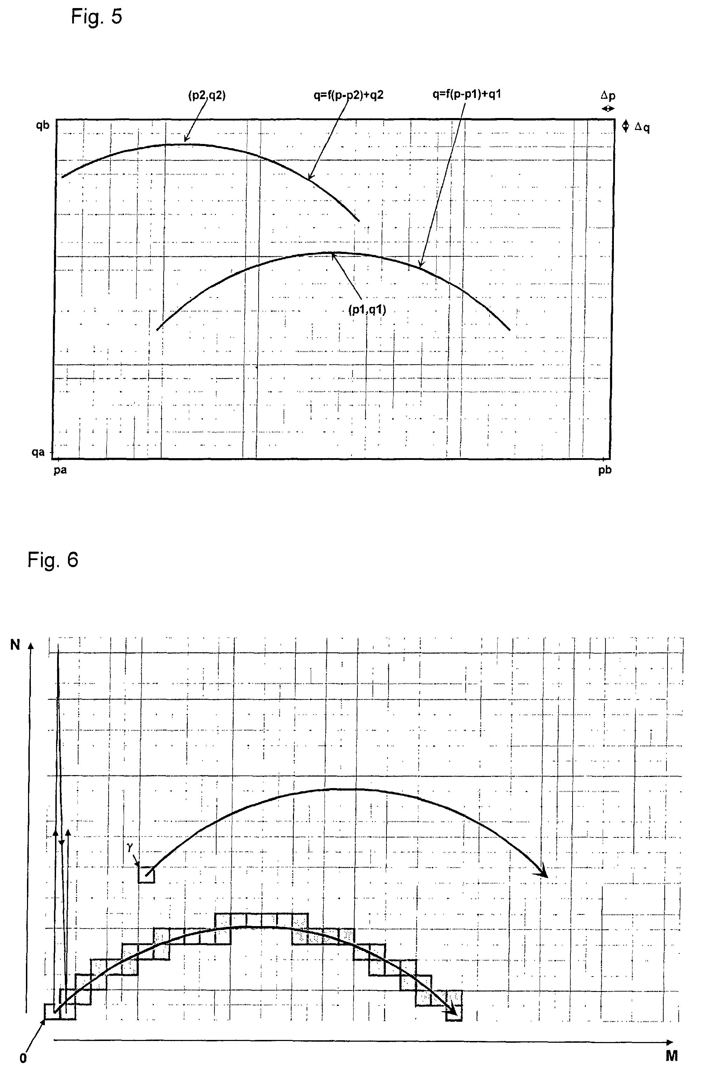

In Fig. 5 sind die Graphen von zwei Kurven in einem p,q-Parameterraum dargestellt. Die Kurve ist in beiden Fällen dieselbe:

$$f_{l(1)}(q) = f_{l(2)}(q) = f(q)$$

Ebenso die Definitionsbereiche der Kurven:

$$s_{l(1)} = s_{l(2)} = s, \, t_{l(1)} = t_{l(2)} = t$$

Allerdings unterscheiden sich die Achsenabschnitte $p_1,q_1$ und $p_2,q_2$. Während die erste Kurve vollständig im Parameterraum verläuft, wird die zweite am linken Rand des Parameterraumes abgeschnitten. Der Parameterraum muss in q-Richtung so groß sein, dass keine der in Frage kommenden Kurven ihn nach oben oder unten verlässt.
Jedes Karo im Parameterraum entspricht einer diskreten Zelle der Größe $\Delta p \cdot \Delta q$ (sog. *Bin)*. Die gesuchte diskrete Funktion $H(p_m, q_n)$, die für jedes Bin $(p_m, q_n)$ definiert ist, würde in diesem Beispiel nur die Werte 0 und 1 annehmen: entlang der Kurvengraphen den Wert 1; in allen übrigen Bins den Wert 0. Wenn sich die beiden Kurven in Fig. 5 schneiden würden, dann würde die Histogrammfunktion am Bin, in dem der Schnittpunkt fällt, den Wert 2 annehmen.
Jedes Bin wird bei der elektronischen Implementierung in der Beschleunigerkarte zu einer Speicherzelle, d. h. der Parameterraum ist der Adressraum eines Hardware-Speichers. In Fig. 6 ist dargestellt, wie sich der lineare Adreßraum des Speichers auf den zweidimensionalen, diskreten Parameterraum der Aufgabenstellung abbildet, der aus M Bins in p-Richtung und N Bins in q-Richtung besteht. Die Adressierung beginnt unten links im Parameterraum und zählt spaltenweise, von links nach rechts fortfahrend.
In Fig. 6 ist auch die Diskretisierung einer spezielle Kurve

$$q = f_l(p)$$

der Schar veranschaulicht. Der Kurve wird ein Array von Adressen

$$\{\phi_l(k) \mid (0 \leq k < K_l)\}$$

zugeordnet (schattierte Bins in Fig. 6). Die Adressen entstammen all den Zellen, die von der Kurve angeschnitten werden. Dazu wird der Anfangspunkt der Kurve $s_l$ an den Anfangspunkt des Parameterraums $p_a$ gelegt (untere Kurve in Abb. 6), die erste Kurvenadresse ist also stets Null:

$$\phi_l(0) = 0$$

Wenn die Kurve später entsprechend den Achsenabschnitten $p_i$, $q_i$ im Parameterraum verschoben wird, beginnt sie in einer Zelle mit der Adresse $\gamma(i)$. [In dieser Zelle liegt der Punkt $(p, q) = (s_l - p_i, f_l(s_l - p_i) + q_i)$]. Die verschobene Kurve

$$q = f_l(p - p_i) + q_i$$

(obere Kurve in Fig. 6) überdeckt nun die Adressen

$$\{\gamma(i) + \phi_l(k) \mid (0 \leq k < K_l)\}$$

d.h. zu den Adressen der Normkurve muss nur die vorgegebene, Messpunktspezifische Adresse $\gamma(i)$ hinzuaddiert werden.

Zusammenfassend kann gesagt werden, dass die Diskretisierung in den Zuordnungen

$P_i \rightarrow \gamma(i)$        $(i = 0,..., I-1)$
$f_l(p) \rightarrow \{\varphi(k) \mid 0 \leq k \leq K_l - 1\}$        $(l = 0,...,L-1)$
bzw.
$f_j(p) \rightarrow \{\varphi_j(k) \mid 0 \leq k \leq K_j - 1\}$        $(j = 0,...,J-1)$

besteht, d.h. jedem Messpunkt wird eine Adresse und jeder Kurve eine Adressfolge zugeordnet. Die Werte der Adressen hängen von den Parameterraumgrenzen und der festgelegten Bingröße ab. Die Beschleunigerkarte erhält als Input nur die diskreten Größen:

$$\begin{aligned}
&\textit{Parameter}: \ M, N \\
&\textit{Meßpunktdaten}: \quad I, \gamma(i), l(i) \ (i = 0...I-1) \\
&\textit{Kurvendaten}: \\
&L, K_l, \phi_l(k) \ (l = 0...L-1, k = 0...K_l - 1) \\
&\textit{bzw.} \\
&J, K_J, \phi_J(k), \psi(j) \ (j = 0...J-1, k = 0...K_j - 1)
\end{aligned}$$

($\psi(j)$ ist die Anfangsadresse des zu $a_j$ gehörigen zweidimensionalen Parameterraums, vgl. Abs. 2.2.3). Ein wesentlicher Teil dieser Größen (die Kurvendaten) kann vor der eigentlichen Prozessierung bestimmt und der Karte übermittelt werden, da diese sich während der wiederholten Durchführung der HT mit immer neuen Messpunkten nicht ändern. Somit muss später nur ein kleiner Teil (die Messpunktdaten) wiederholt berechnet und an die Karte übertragen werden.

**2.2.3 Funktionsablauf**

Der Funktionsablauf auf der Karte wird im Folgenden formal definiert.

1. Input der Parameterraumdimensionen M, N.

2. Input der L bzw. J Adresssequenzen

$$\{\phi_l(k) \mid \mid (0 \le k < K_l)\} \qquad l = 0, ..., L\text{-}1$$

bzw.

$$\{\phi_j(k) \mid (0 \le k < K_j)\} \qquad j = 0, ..., J\text{-}1$$

Der jeweilige Satz von Adresssequenzen ist das diskrete Gegenstück der Kurvenschar.

3. Input der I Startadressen

$$\gamma(i) \qquad i = 0, ..., I\text{ - }1$$

und Kurvenparameter bzw. Offsetadressen

$$l(i) \qquad i = 0,...,I\text{ -}1$$

bzw.

$$\psi(j) \qquad j = 0, ..., J\text{-}1$$

Die Startadressen gehören zu den I Messpunkten. Sie beinhalten implizit die Achsenabschnitte $p_i, q_i$. Im dreidimensionalen Falle muss der Parameterraum J Mal aufgespannt werden. Die j-te Kopie des Parameterraums liegt im Adressbereich

$$\psi(j)...\psi(j\text{+}1)\text{-}1$$

Üblicherweise berechnet sich $\psi(j)$ zu $\psi(j) = j \cdot M \cdot N$.

4. Durchführung eines Zwei- bzw. Dreifachloops zur Berechnung der Histogrammfunktion:

```
for j=0..J-1 loop  -- (J=1 bzw. J>1)
      for i=0..I-1 loop
        l := l(i);  bzw.   l := j;
          a0 := γ(i); bzw.   a0 := γ(i)+ψ(j);
          for k=0..K_l loop
               address := a0 + φ_l(k);
               data(address) := data(address) + 1;
          end loop k;
      end loop i;
  end loop j;
```

data(address) bezeichnet den Inhalt des Hardware-Speichers an der Adresse address.

5. Auslesen des gesamten Speichers, Bestimmung des Maximalwertes T von data() im gesamten Addressraum, Bestimmung einer Adresse $\bar{\gamma}$, an der

$$data(\bar{\gamma})=T$$

ist.

6. Output $\bar{\gamma}$ und T. Aus $\bar{\gamma}$ lassen sich die gesuchten Maximalparameter $(\bar{p},\bar{q})$ bzw. $(\bar{j},\bar{p},\bar{q})$ berechnen.

**2.3 Architektur**

**2.3.1 Funktion**

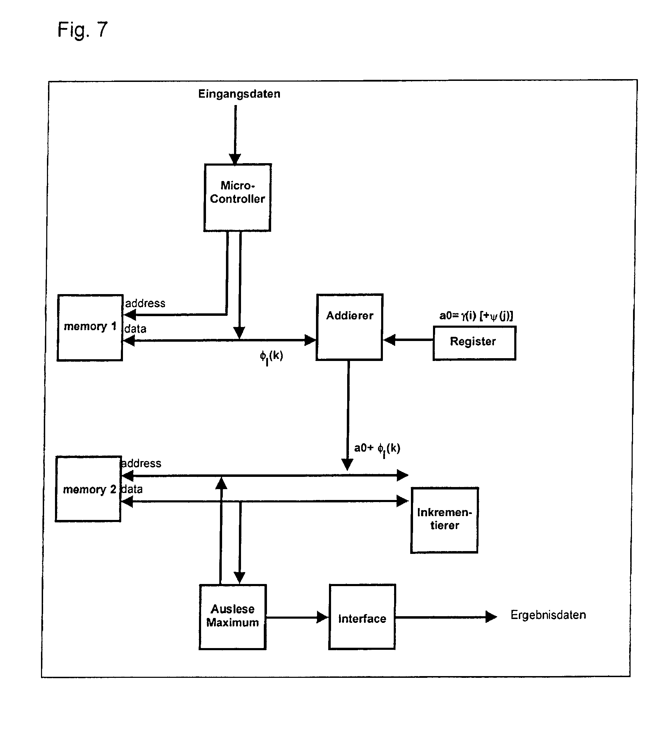

Die in Fig. 7 dargestellt Architektur dient zur Implementierung des in Abs. 2.2.3 definierten Funktionsablaufes, d.h. neben In- und Output vor allem die möglichst effiziente Durchführung des Zwei- bzw. Dreifachloops nach Punkt 4.

Ein Microcontroller ist für die Übernahme der Inputdaten und die Steuerung der übrigen Funktionsmodule zuständig. Eine Memory Bank memory 1 speichert die Kurvendaten $\phi_1$ (k) und die Messpunktdaten $\gamma$ (i). Eine zweite Memory Bank memory 2 speichert die eigentlichen Histogrammdaten data (address).

Die Architektur besteht im weiteren aus einem fixed point, 16 Bit Addierer, einem Inkrementierer, und einem "Auslese Maximum" Modul zum Auffinden des größten Wertes von data (). Ein Register, das mit dem Ausgang des Addierers verbunden werden kann, stellt den zweiten Operanden für den Additionsvorgang bereit.

Im ersten Schritt einer durchzuführenden Hough-Transformation lädt der Microcontroller, der zugleich das Inputinterface nach außen bereitstellt, die erforderlichen Kurven- und Messpunktdaten in Memory 1. Nur die Messpunktdaten werden später, bei wiederholter Durchführung derselben HT, neu eingespeichert.

Im nächsten Schritt wird die eigentliche HT ausgeführt, d.h. es wird das Histogrammarray data (address) gemäß Punkt 4 in Absatz 2.2.3 aufsummiert. Dazu wird zunächst für jeden einzelnen Messpunkt das Register a0 mit dem Wert $\gamma$ (i) bzw. y (i) + $\psi$ (j) aufgeladen, je nachdem, ob es sich um die zweidimensionale oder dreidimensionale HT handelt. Für die zum aktuellen Messpunkt gehörige Kurve $\phi_1$ (k) müssen nun nacheinander die Summen address = a0 + $\phi_1$ (k) gebildet werden. Diese Summe muß in höchstens 3 Taktzyklen berechnet werden (s.u.), und das Ergebnis address muß dem Memory 2 als aktueller Adresswert übergeben werden. Deshalb ist der Ausgang des Addierers direkt mit dem Adressbus des Memory 2 verbunden. Solange address am Memory 2 anliegt, muß der zugehörige Datenwert data (address) ausgelesen, um den Wert 1 inkrementiert bzw. dekrementiert, und wieder zurückgeschrieben werden. Der Fall der Inkrementierung liegt bei der Histogrammerstellung für die erste Bestimmung einer Geraden oder eines Kettenlinienstücks in einem Messpunktsatz vor; für die Bestimmung weiterer Figuren aus demselben Messpunktsatz wird die Dekrementierung verwendet (vgl. Abs. 1.2.3).

Diese Operation bestimmt in erster Linie die Rechengeschwindigkeit der Karte und erfordert bei optimaler Implementierung 3 Taktzyklen. Deshalb ist ein spezielles Inkrementiermodul vorgesehen, das optimiert implementiert sein muss. Der Addierer muss nur so schnell wie dieses Modul sein.

Nach vollendeter Berechnung von data (address) muss schließlich Memory 2 ausgelesen werden, und es müssen der Maximalwert von data (...) sowie die maximierende Adresse festgestellt und ausgegeben werden. Dieser Vorgang bestimmt in zweiter Linie die Rechengeschwindigkeit der Karte und wird deshalb ebenfalls mit Hilfe eines optimalen Hardware-Moduls ausgeführt. Alternativ kann er jedoch evtl. auch vom Microcontroller ausgeführt werden, der dann natürlich auch mit Memory 2 verbunden sein muss (in Fig. 7 nicht dargestellt).

### 2.3.2 Rechenzeitabschätzung

Es soll im folgenden die Rechenzeit für die Durchführung der HT zur Leitungserkennung abgeschätzt werden, basierend auf der im vorigen Absatz dargestellten Architektur. Die hohe Rechenleistung der Karte im Vergleich zu einer Softwareimplementierung ist die Folge einer speziell auf die HT zugeschnittenen Hardware, die ohne Multiplikatoren und Floating Point Arithmetik auskommt.

Es wird nur der Rechenaufwand für die Bestimmung von Kettenlinienstücken abgeschätzt, weil dies aufwendiger ist als die Bestimmung von horizontalen Geraden. Für die Abschätzung gehen wir von folgenden, als typisch anzusehenden Zahlen aus:

| | |
|---|---|
| 4 | Bilder, die in der Sekunde auszuwerten sind; |
| 20 | Geraden, die als Ergebnis der ersten HT vorliegen; |
| 40 | Messpunkte pro vertikaler Ebene, in der Kettenlinienstücke gesucht werden; |
| 40 | verschiedene Werte des "Durchhängeparameters" $a_j$; |
| 100 | Adressen pro Messpunktgraph |
| 3 | Takte pro Inkrement/ Dekrement bei der Histogrammfunktion; |
| 2 | als Zuschlagsfaktor für die Kettenliniensuche, nachdem das erste Kettenlinienstück gefunden wurde. |

Das Produkt aus diesen Werten beträgt ca. 80 Millionen Takte und umfasst als erste Stufe die Berechnung der Histogrammfunktion. Für die Bestimmung der Auswertung der Histogrammfunktion durch Auslesen des Speichers sind folgende Zahlen von Bedeutung:

| | |
|---|---|
| 4 | Bilder pro Sekunde; |
| 20 | Geraden, die als Ergebnis der ersten HT vorliegen; |
| 5 | Kettenlinien, die pro Gerade gefunden werden (also 100 Kettenlinien insgesamt); |
| 40 | verschiedene Werte des "Durchhängeparameters" $a_j$; |
| 10000 | Bins im diskreten (b,c)-Parameterraum; |
| 1 | Takt zum Auslesen eines Histogrammwerts. |

Das Produkt aus diesen Werten beträgt 160 Millionen Takte, insgesamt also 240 Millionen Takte, die pro Sekunde auszuführen sind. Taktraten von ca. 250 MHz sind bei kommerziellen Speichern und Prozessoren erreichbar, so dass die Echtzeitfähigkeit der Erfindung hiermit nachgewiesen ist. Die obigen Parameterwerte sind darüberhinaus nicht allzu optimistisch angesetzt; in vielen praktischen Fällen kommen kleinere Werte vor. Schließlich ist eine weitere Verringerung der Rechenzeit durch den Einsatz mehrerer, parallelarbeitender Beschleunigerkarten problemlos möglich.

### Patentansprüche

1. Verfahren zur Echtzeit-Leitungserkennung für tieffliegende Fluggeräte, mit dem Verfahrensschritt der Abtastung des Gesichtsfelds vor dem Fluggerät mittels eines Entfernungsbildsensors; **dadurch gekennzeichnet** mit folgenden weiteren Verfahrensschritten:

   - Erzeugung einer Messpunktwolke aus den Ausgabedaten des Entfernungsbildsensors und den Ausgabedaten eines Navigationssystems, wobei ein Messpunkt durch seine drei Ortskoordinaten in einem erdfesten Koordinatensystem festgelegt ist,
   - Elimination derjenigen Messpunkte innerhalb der Messpunktwolke, die den Boden repräsentieren,
   - Suche nach horizontalen Geraden innerhalb der Messpunktwolke unter Anwendung einer Hough-Transformation,

- Suche nach Kettenlinien innerhalb solcher vertikaler Ebene, in der eine gefundene horizontale Gerade liegt, unter Anwendung einer Hough-Transformation.

**2.** Verfahren nach Anspruch 1, **dadurch gekennzeichnet, dass** die Hough-Transformation als zweistufiges Verfahren durchgeführt wird, wobei zuerst eine scharfe Hough-Transformation ausgeführt wird, der zur Ergebnisverbesserung eine unscharfe Hough-Transformation nachgeschaltet wird.

**3.** Verfahren nach Anspruch 1 oder 2, **dadurch gekennzeichnet, dass** die Hough-Transformation zur Suche einer horizontalen Gerade oder Kettenlinie folgendermaßen durchgeführt wird:

- der Parameterraum der Hough-Transformation wird auf den Adressraum eines Hardware-Speichers abgebildet, wobei
- der einem Messpunkt zugeordnete Funktionsgraph der Hough-Transformation in dem Adressraum des Hardware-Speichers derart dargestellt wird, dass die entsprechenden Speicherplätze inkrementiert werden, wobei dieser Verfahrensschritt für die Funktionsgraphen aller Messpunkte durchgeführt wird, und
- nach Durchlaufen aller Messwerte derjenige Speicherplatz mit dem größten Inhalt ermittelt wird; dessen Lage innerhalb des Adressraums legt die Bestimmungsgrößen der gefundenen horizontalen Gerade oder Kettenlinie fest.

**4.** Verfahren nach Anspruch 3, **dadurch gekennzeichnet, dass**

- nach Auffinden einer horizontalen Gerade oder Kettenlinie ermittelt wird, welche der Messpunkte exakt oder im Rahmen der zugelassenen Unschärfe auf der gefundenen horizontalen Geraden oder Kettenlinie liegen,
- dass die diesen Messpunkten zugeordneten Funktionsgraphen der Hough-Transformation derart in dem Adressraum dargestellt werden, dass die entsprechenden Speicherplätze dekrementiert werden, und anschließend
- derjenige Speicherplatz mit dem größten Inhalt ermittelt wird; dessen Lage innerhalb des Adressraums legt die Bestimmungsgrößen einer weiteren gesuchten horizontalen Gerade oder Kettenlinie fest.

**Claims**

**1.** A method of detecting cables in real time for low-flying aircraft, with the method step of scanning the field of vision in front of the aircraft using a distance image sensor, characterized with the following further method steps:

- generation of a measurement point cloud from the output data of the distance image sensor and the output data of a navigation system, a measurement point being defined by its three positional coordinates in an earth-fixed co-ordinate system,

- elimination of those measurement points within the measurement point cloud which represent the ground,

- search for horizontal straight lines within the measurement point cloud using a Hough transformation,

- search for catenaries within such a vertical plane in which a found horizontal straight line lies, using a Hough transformation.

**2.** A method according to Claim 1, **characterized in that** the Hough transformation is carried out as a two-step method, a precise Hough transformation being carried out first, and an imprecise Hough transformation being connected. downstream from it to improve the result.

**3.** A method according to Claim 1 or 2, **characterized in that** the Hough transformation to search for a horizontal straight line or catenary is carried out as follows:

- the parameter space of the Hough transformation is mapped onto the address space of a hardware memory,

- the function graph (of the Hough transformation) assigned to a measurement point being represented in the address space of the hardware memory in such a way that the corresponding memory locations are incremented, this method step being carried out for the function graphs of all measurement points, and

- the memory location with the greatest content being determined after passing through all measured values; its position within the address space defines the determining values of the found horizontal straight line or catenary.

4. A method according to Claim 3, **characterized in that**

- after a horizontal straight line or catenary is detected, it is determined which of the measurement points are exactly, or within the permitted imprecision, on the found horizontal straight line or catenary,

- the function graphs (of the Hough transformation) assigned to these measurement points are represented in the address space in such a way that the corresponding memory locations are decremented, and then

- the memory location with the greatest content is determined; its position within the address space defines the determining values of a further sought horizontal straight line or catenary.

**Revendications**

1. Procédé de détection de lignes électriques en temps réel pour aéronefs volant à basse altitude, comprenant l'étape consistant à balayer la zone d'observation devant l'aéronef au moyen d'un capteur de télédétection ;
   **caractérisé par** les étapes supplémentaires suivantes consistant à :

- produire un nuage de points de mesure à partir des données de sortie du capteur de télédétection et des données de sortie d'un système de navigation, un point de mesure étant déterminé par ses trois coordonnées géométriques dans un système de coordonnées terrestre ;
- éliminer ceux des points de mesure à l'intérieur du nuage de points de mesure qui représentent le sol ;
- rechercher des droites horizontales à l'intérieur du nuage de points de mesure en utilisant une transformation de Hough ;
- rechercher des chaînettes à l'intérieur d'un plan vertical dans lequel se trouve une droite horizontale trouvée en utilisant une transformation de Hough.

2. Procédé selon la revendication 1, **caractérisé en ce que** la transformation de Hough est effectuée comme un procédé à deux phases, dans lequel on effectue d'abord une transformation de Hough précise, suivie d'une transformation de Hough floue en vue d'une amélioration du résultat.

3. Procédé selon la revendication 1 ou 2, **caractérisé en ce que** la transformation de Hough est effectuée pour rechercher une droite horizontale ou chaînette de la manière suivante :

- l'espace paramétrique de la transformation de Hough est représenté sur l'espace d'adressage d'une mémoire physique, dans lequel
- le graphique de fonction affecté à un point de mesure de la transformation de Hough dans l'espace d'adressage de la mémoire physique est représenté de telle sorte que les emplacements de mémoire correspondants sont incrémentés, cette étape étant effectuée pour les graphiques de fonction de tous les points de mesure ; et
- après itération de toutes les valeurs mesurées l'emplacement de mémoire avec le plus grand contenu est déterminé dont la position à l'intérieur de l'espace d'adressage fixe les grandeurs fondamentales de la droite horizontale ou chaînette trouvée.

4. Procédé selon la revendication 3, **caractérisé en ce que**

- après la localisation d'une droite horizontale ou chaînette, il est déterminé lesquels des points de mesure se trouvent exactement sur la droite horizontale ou chaînette trouvée, ou dans la limite d'une certaine imprécision par rapport à celle-ci ;
- les graphiques de fonction de la transformation de Hough, affectés à ces points de mesure, sont représentés dans l'espace d'adressage de telle sorte que les emplacements de mémoire correspondants sont décrémentés ; et ensuite
- l'emplacement de mémoire avec le plus grand contenu est déterminé ; la position de celui-ci à l'intérieur de l'espace d'adressage fixant les grandeurs fondamentales d'une autre droite horizontale ou chaînette recherchée.

Fig. 1

```
  ┌──────────┐              ┌──────────┐
  │  Laser-  │              │   Nav-   │
  │ scanner  │              │  system  │
  └────┬─────┘              └────┬─────┘
       │                         │
       └──────────┐   ┌──────────┘
                  ▼   ▼
┌──────────────┐ ┌──────────┐
│     HT-      │ │          │
│Beschleuniger-│◄►│Prozessor │
│    karte     │ │          │
└──────────────┘ └────┬─────┘
                      │      │
                      ▼      ▼
                 ┌──────────┐
                 │Auswerte- │
                 │ einheit  │
                 └────┬─────┘
                      │
                      ▼
                 ┌──────────┐
                 │Flight    │
                 │Display / │
                 │  Helm    │
                 └──────────┘
```

Fig. 2

Fig. 3

Fig. 4

Fig. 5

Fig. 6

Fig. 7

Eingangsdaten

Micro-Controller

memory 1  address
data

$\phi_l(k)$

Addierer

$a0 = \gamma(i)\ [+\psi(j)]$

Register

$a0 + \phi_l(k)$

memory 2  address
data

Inkremen-tierer

Auslese Maximum

Interface

Ergebnisdaten